# EUROPEAN PATENT APPLICATION

(11) **EP 4 420 800 A1**
(43) Date of publication of application: **28.08.2024**
(21) Application number: 22883028.7
(22) Date of filing: 20.10.2022
(51) Int. Cl.: B07C 5/34, B65G 47/24

(54) **RECEIVER MODULE AND TRANSPORT SYSTEM FOR INSPECTING FRUIT IN A CALIBRATOR**

(30) Priority: 21.10.2021 ES 202130986
(71) Applicant: Roda Iberica, S.L., 46600 Alzira Valencia (ES)
(72) Inventor: BLANC, Christophe, 46600 Valencia (ES)
(74) Representative: Ungria López, Javier
(86) International application number: PCT/ES2022/070671
(87) International publication number: WO 2023/067227

(57) **Abstract**

The invention relates to a receiver module which comprises a lower trolley (3a) and an upper cup (3b) that is coupled with the trolley (3a) in a floating manner by means of an articulated rod mechanism (15) that is configured so that the cup (3b) can be raised and tilted to one side or the other in order to discharge the fruit (4) supported by the cup (3b), said cup including two biconical rollers (5) that are faired into the curved-concave bottom (21) of the actual cup structure (3b); wherein the biconical rollers (5) are completely surrounded by the curved-concave bottom (21) of the cup (3b); and wherein said fairing is configured to prevent the catching of appendages, leaves and branches of the fruit (4). The transport system includes a succession of receiver modules (3).

## Description

### Object of the invention

The present invention relates to a receiver module and a transport system for inspecting fruit in a calibrator, the purpose of which is to inspect different parameters of fruit during transport. The fruit is housed in a unitary manner inside characteristic cups that are part of several receiver modules; wherein the fruit can be rotated simultaneously inside the cups during transport for inspection through an artificial vision device. It is also possible to dynamically and individually weigh and vibrate the fruit during transport. The fruit can be fruits as well as greens and vegetables such as, for example, peppers, with the advantage that the peduncles of said peppers do not get caught inside the cups as a result of their characteristic structure.

### Technical field of the invention

The present invention is comprised within the field of devices, machines and systems for receiving and transporting edible pieces of fruit and other edible products such as peppers, for example.

### Background of the invention

Calibrators that usually have several systems for receiving and transporting fruit, such as cup structures, hand structures, bicone structures, etc., are known today.

It should be noted that the fruit not only has to be transported along the calibrator but it is also necessary to perform operations, such as:
- Vibration.
- Weighing.
- Fruit surface recognition by means of artificial vision cameras.
- Firmness detection using physical methods (probing).
- Detection of different parameters by means of spectrometry, X-rays, light transmission, etc.

In addition to the weighing operation, one of the most common systems is the use of cameras to visualize the surface of the fruit, such that in order to perceive its entire surface it is necessary to rotate the fruit under the focus and gaze of said cameras. In the sector, the combination of these operations is called: "rotation under cameras".

One type of cup structure is the so-called blind cups that are used to process any type of fruit, regardless of the size or whether or not they have leaves, although the size of the cups usually varies depending on the family of fruits to be treated.

The hand structure is very useful for transporting fruit that must pass mainly through a weighing station, such that "pivots" go through the gaps left by the fingers of the hand structure to raise and separate the fruit from its container and thus be able to perform the weighing operation.

Moreover, the bicone structure is frequently used, since it allows performing rotation under cameras. This system works well on fruit with substantially spherical shapes.

In contrast, when processing fruit that, for aesthetic reasons, includes leaves or branch fragments as an extension of the peduncle of the fruit (for example, peppers), it is not possible to rotate the fruit because said leaves or branch fragments get caught in the gaps located between the series of bicones themselves and their supports, for example.

The patent with publication number US 5267654 A discloses a cup-shaped holder article that allows the rotation of a part it transports with exposure to optical scanners. Said article is intended for the rotation and transport of pieces of fruits and vegetables; wherein said rotation is carried out by means of bicone-shaped rollers that are circumscribed at the bottom of the cup-shaped holder article.

The patent with publication number US 4033450 A discloses a fruit transport system that includes modular units which individually receive each piece of fruit; wherein each modular unit has means for supporting and rotating the fruit such that it is oriented before being inspected. In turn, each modular unit has a receptacle with a lower opening that includes two parallel spool-shaped rollers.

Patents with publication no. US 3738474 A and US 3563362 A disclose devices or systems for handling pieces of fruit that include rotating elements to cause the rotation of the pieces of fruit in a unitary manner; wherein the rotation of said rotating elements is carried out by means of transmission mechanisms that include cogged wheels and sprockets that mesh together.

### Description of the invention

In order to achieve the objectives and prevent the drawbacks mentioned in the preceding sections, the invention proposes a receiver module and a transport system for inspecting fruit in a calibrator.

The receiver module comprises a lower trolley and an upper cup that is coupled to the trolley in a floating manner by means of an articulated bar mechanism, which comprises a first fixed articulated connection located at the base of the trolley and a second movable articulated connection located in the cup that is configured to receive each piece of fruit.

The movement between the cup and the trolley is guided and limited by different tabs and notches available in both parts.

The cup includes, coinciding with its curved-concave bottom, two parallel biconical rollers configured to rotate by means of a transmission device; wherein said rotation causes the rotation of the fruit that is supported and rests on the two biconical rollers.

The articulated rod mechanism is configured so that the cup can be raised and tilted to one side or the other in order to discharge the fruit from the cup.

The biconical rollers are faired into the curved-concave bottom of the actual cup structure, while the trolley comprises a base and two side walls. Said fairing is configured to prevent the catching of appendages, leaves and branches of the fruit.

The curved-concave bottom of the cup comprises a central portion located between the two biconical rollers and a perimeter portion spanning an angular amplitude of 360°, wherein this perimeter portion completely surrounds the two faired-in biconical rollers, even covering opposing end areas which are located above the opposing ends of the biconical rollers; and wherein said perimeter portion provides static and dynamic stability to any position of the fruit when it is inside the cup.

The transmission device for rotating the biconical rollers comprises a pulley coaxially integral with a centred cogged wheel that meshes with two side pinions integral with the ends of the biconical rollers.

The transport system for inspecting fruit includes a succession of receiver modules such as those described above.

The trolleys of said receiver modules are anchored to at least one transport chain by means of anchoring supports that link the trolleys of said receiver modules to the chain; wherein the chain is coupled with two cogged wheels; and wherein one of these two cogged wheels transmits movement to the chain. The connection between the trolleys and the anchoring supports is a loose connection.

The transmission device of each receiver module receives movement through an upper branch of a motorized belt which rests on a longitudinal guide; wherein said branch tangentially contacts the pulley which is part of the transmission mechanism.

Said motorized belt is coupled with two end pulleys, such that the chain and said belt are arranged in parallel.

During the mobility of the chain which drives the receiver modules, the belt has a linear speed selected from a linear speed greater than the chain, causing the rotation of the biconical rollers, and a linear speed equal to the speed of the chain at which the biconical rollers do not rotate. Rotation of the biconical rollers in the opposite direction can be achieved even by regulating a belt speed that is lower than the chain speed.

The trolley includes two opposing projections with facing elongated holes for coupling the trolley with the chain by means of an anchoring support; wherein the trolley is coupled in an articulated manner with the anchoring support by means of lugs of the anchoring support which fit with vertical clearance into the elongated holes integrated in said trolley.

The transport system for inspecting fruit further comprises a first horizontal guide arranged parallel to an upper branch of the chain which drives the succession of receiver modules; wherein the trolleys of the different receiver modules rest on said first horizontal guide when they are driven along said upper branch of the chain in an area in which the rotation of the biconical rollers is carried out.

The transport system of the invention includes dynamic weighing means comprising a load cell including a pair of parallel flats which are configured so that the cups rest thereon in a unitary manner during the advancement of the receiver modules driven by the chain and running supported on a second horizontal guide formed by two parallel branches between which the chain is located in parallel; wherein when the cups are supported on the parallel flats, said cups are raised upwards being articulated with the trolleys by means of the articulated rod mechanisms with a floating effect of the cups with respect to the trolley.

Therefore, the weighing of the fruit occurs when the cup circulates resting on the parallel flats of the load cell; and more specifically when they rest on flaps integral with the cup which protrude from under said cup.

As a result of the configuration of the structure of the assembly formed by the cup and the pair of biconical rollers, it is possible to handle a wide range of fruit sizes and it is also possible to rotate each piece of fruit in order to carry out "rotation under cameras", with the advantage of ensuring that the fruit keeps rotating on the bicones inside the cup.

The meticulous fairing of the cup prevents branches, leaves or peduncles of the fruit from getting caught in gaps as is conventionally the case, whereby the proper functioning of the system is not interrupted.

The characteristic structure of the faired-in bicones prevent gaps where leaves, peduncles, etc., that the market wants to include in the handled fruits, may get caught. No conventional transport system or machine has achieved such advantageous integration as the invention.

It is highlighted that in the invention, the traction of the biconical rollers occurs through a single cogged wheel. This transmission chain allows the biconical rollers to be separated from the first and second horizontal guides formed by the two branches.

It should be noted that the traction or rotational mobility of the bicones is not trivial, such that they are driven independently of the movement of the assembly of each receiver module that incorporates the respective cup, as mentioned above.

The system of the invention includes the self-driven motorized belt which transmits the rotation in a specific area to the transmission device and this to the bicones. The speed variation of said motorized belt is what allows the rotation speed of the bicones to be modulated at will. Its rotation can even be cancelled, normally when the fruit cannot be rotated due to its geometry or because it has leaves or a twig attached to the peduncle. This particularity is not observed in conventional machines and systems.

The cup of the invention is more tolerant of allowing fruit which is not spherical in shape to rotate in the cup, even if it has leaves or branches.

It is also highlighted that in the event that the fruit does not allow rotation or gets caught, the rotation of the biconical rollers can be eliminated at will.

To help better understand this specification, and as an integral part thereof, a series of figures is attached, in which the object of the invention is depicted in an illustrative and non-limiting manner.

### Brief description of the figures

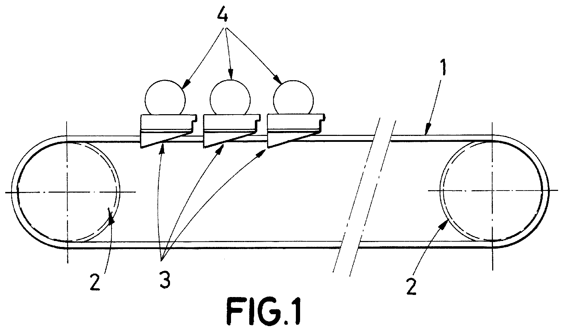

**Figure 1** shows an elevational view of a part of the transport system for inspecting fruit in a calibrator including a succession of receiver modules for receiving the fruit which are anchored to a chain, object of the invention.

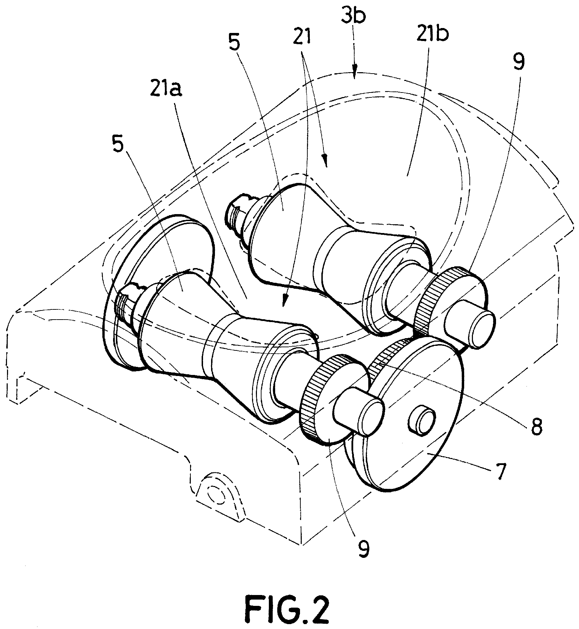

**Figure 2** shows a perspective view of two parallel biconical rollers which receive rotational mobility through a transmission device.
**Figure 3** shows an elevational view of a cup structure the bottom of which integrates a pair of biconical rollers; wherein the cup is part of each receiver module. A part of the transmission device referred to in Figure 2 is also shown.
**Figure 4** shows a perspective view of the transport system of the invention.
**Figure 5** shows a perspective view of a receiver module for receiving the fruit comprising a trolley and a cup that is coupled with the trolley by means of a floating coupling.

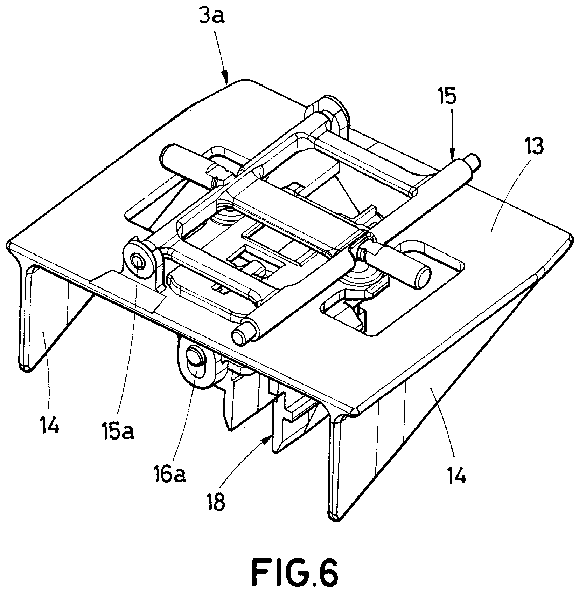

**Figure 6** depicts a perspective view of the trolley of the receiver for receiving fruit, in which a connecting rod mechanism linking the cup to the trolley is essentially shown.
**Figure 7** shows a perspective view of a dynamic weighing system for weighing fruit deposited on the cups.

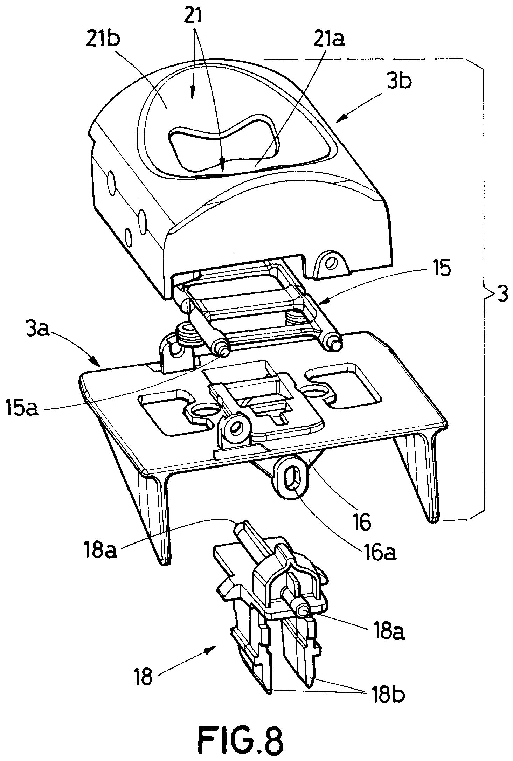

**Figure 8** shows an exploded perspective view of a receiver module which is fixed to the chain by means of an anchoring support.

### Description of an exemplary embodiment of the invention

Considering the numbering used in the figures, the transport system for inspecting fruit in a calibrator comprises at least one chain 1 coupled with two cogged wheels 2; wherein a succession of receiver modules 3 for receiving fruit 4 is fixed on said chain, wherein each of these receiver modules 3 comprises a lower trolley 3a and an upper cup 3b; and wherein the receiver modules 3 are fixed to the chain 1 by means of their trolleys 3a.

Said cup 3b is coupled with the trolley 3a by means of a floating coupling that allows the cup 3b to be raised during a phase of weighing the fruit 4 when it is inside each cup 3b simultaneously with the movement of the receiver modules 3 driven by the chain 1; wherein during the weighing phase, the cup 3b together with the fruit 4 are raised upwards.

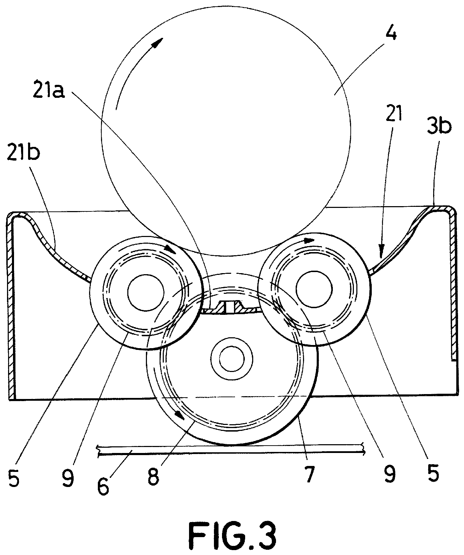

As shown more clearly in Figure 3, each cup 3b includes, coinciding with its curved-concave 21, two parallel biconical rollers 5 configured to rotate by means of a transmission device; wherein said rotation causes the rotation of the fruit 4 inside the cup 3b, since said fruit 4 is tangentially supported on the pair of biconical rollers 5; and wherein said transmission device is integrated and concealed in a part of the actual cup 3b. With this described structure, the advantages of the cup 3b combined with the advantages of the biconical rollers 5 are achieved.

The bobbin-shaped biconical rollers 5 are faired into the curved-concave 21 of the actual cup structure 3b, eliminating the gaps where branches, peduncles or leaves of fruit including these protruding elements such as, for example, the peduncles of peppers, may get caught.

The curved-concave bottom 21 of the cup 3b comprises a central portion 21a located between the two biconical rollers 5 and a perimeter portion 21b spanning an angular amplitude of 360°, such that this perimeter portion 21b completely surrounds the two faired biconical rollers 5, even covering opposing end areas which are located above the opposing ends of the biconical rollers 5, such that the fruit 5 rests on the biconical rollers 5 and can also rest on an area of the perimeter portion 21b, whereby the fruit 4 flows and rotates at all times with total freedom without the possibility of getting caught or colliding against any part of the cup 3b, contrary to what happens in patent US 5267654 in which the cup 3b does not include the characteristic perimeter portion 21b of the invention.

It should be noted that in said patent of the state of the art, US 5267654, during rotation, the fruit 4, the peduncles and even some fruits without peduncles, may get caught on or collide with the edges 30 of the opposing side walls 23a that are part of the cup of said patent US 5267654, whereby the proper functioning of the transport system would be interrupted because the fruit could be improperly discharged from the cup.

It is important to note that the perimeter portion 21b of the curved-concave bottom 21 of the cup 3b has an area around its entire contour that rises above the biconical rollers 5.

Moreover, the biconical rollers 5 rotate by means of an external split, this being a selectable rotation function or operation, such that each piece of fruit 4 may or may not be rotated at will at a required regulated speed.

The rotation of the biconical rollers 5 through a cogged wheel 8 is achieved by means of a motorized belt 6 that includes an upper branch and another lower branch, while said belt 6 is coupled with two end pulleys 10.

The upper branch of said belt 6 tangentially contacts the transmission device which comprises a pulley 7 integral with the centred cogged wheel 8 that meshes with two side pinions 9 integral with the ends of the biconical rollers 5; wherein said upper branch of the belt 6 rests on a longitudinal guide 11.

Thus, the belt 6 transmits its movement by tangential contact to the pulley 7 of the transmission device to provide rotation to the biconical rollers 5, such that this rotation is performed simultaneously with the advancement of the receiver modules 3 driven by means of the chain 1.

It should be noted that the rotation of the biconical rollers 5 can be cancelled by matching the linear speed of the belt 6 with the linear translational or drive speed of the chain.

Thus, each pair of biconical rollers 5 rotate by means of the centred cogged wheel 8 to which there is attached the pulley 7 on which the motorized belt 6 that is coupled with two end pulleys 10 drives. The centred cogged wheel 8 and the pulley 7 are integrally attached to one another, while being arranged coaxially at the same time.

Furthermore, by varying the speed of the motorized belt 6, the speed of rotation of the fruit inside the corresponding cup 3b can be changed, potentially cancelling the rotation or even reversing its direction of rotation.

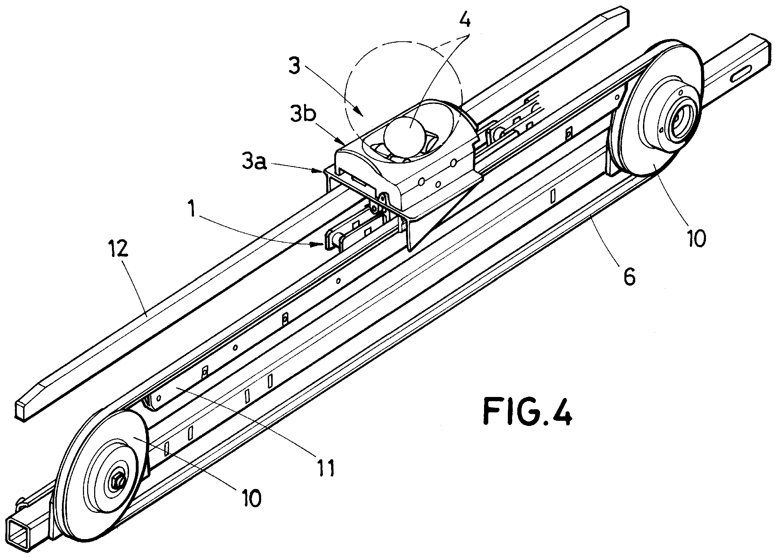

As shown in Figure 4, the transport system of the invention comprises a first horizontal guide 12 arranged parallel to an upper branch of the chain 1 which drives the succession of receiver modules 3; wherein the trolleys 3b of the different receiver modules 3 rest on said first horizontal guide 12 while they are driven along the upper branch of the chain 1. Said first horizontal guide 12 comprises a single branch and is located in a rotation area for the fruit 4 which rotates through the bicones 5, such that the cup 3b rests on one side on the first horizontal guide 12 and on the other side on the belt 6 which confers rotation to the bicones 5 by means of the transmission device.

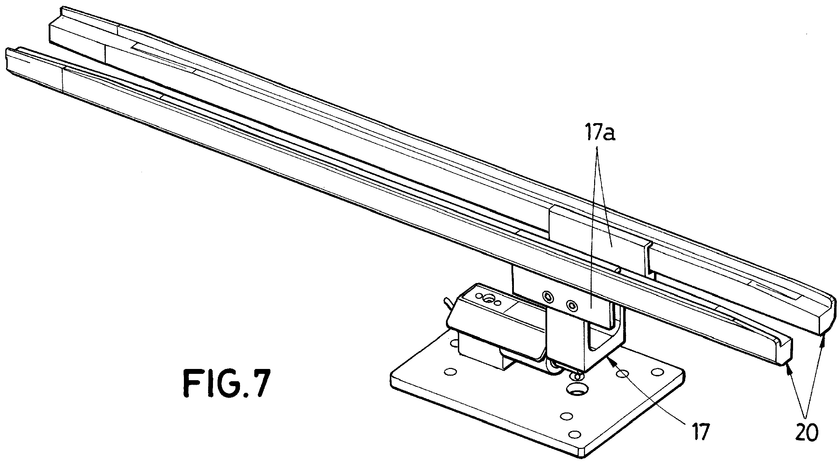

As shown in Figure 7, the transport system of the invention includes a second horizontal guide 20 formed by two parallel branches between which runs the upper branch of the chain 1 which drives the receiver modules 3; wherein this second horizontal guide 20 is located in a weighing area for the fruit 4, as will be described below.

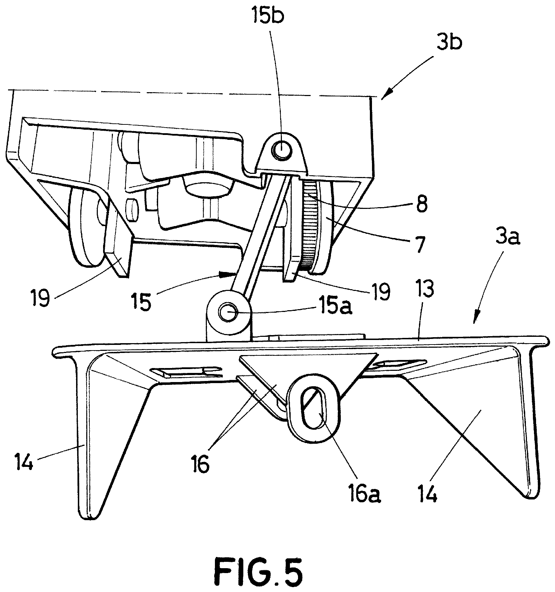

Figure 5 shows the assembly formed by a receiver module 3 in a deployed position, such that the trolley 3a comprises a base 13 and two side walls 14 between which the first and second horizontal guides 12, 20 are located, while the cup 3b comprises the curved-concave bottom 21 interrupted by the two biconical rollers 5 on which the respective fruit 4 rests.

The cup structure 3b is coupled with the trolley 3a in a floating manner by means of a articulated rod mechanism 15 comprising a first fixed articulated connection 15a located in the base 13 of the trolley 3a and a second movable articulated connection 15b located in the cup 3b.

Moreover, the trolley 3a includes two opposing projections 16 with facing elongated holes 16a to enable engaging the trolley 3a with the chain 1 by means of an anchoring support 18; wherein the projections 16 are located on planes perpendicular to the plane where the two side walls 14 of the base 13 of the trolley 3a are located.

Thus, the trolley 3a is coupled in an articulated manner with the anchoring support 18 by means of lugs 18a that fit with vertical clearance into the elongated holes 16a of said trolley 3a. Moreover, the anchoring support 18 has projections 18b that allow it to engage with the chain 1; wherein the direction of the articulated connection of the trolley 3a to the anchoring support 18 is in the longitudinal direction of the chain 1.

The loose connection of the trolley 3a on the anchoring support 18 as referred to in the preceding paragraph allows a certain mobility between both elements 3a, 18 in order to avoid transmitting overloads on the chain 1 and/or so that they could be transmitted to the rest of the transport system of the machine.

When the receiver modules 3 are driven by means of the chain 1, there is an initial area of the calibrator where said receiver modules 3 are subjected to vibration which is possible as a result of the vertical clearance allowed by the elongated holes 16a into which the lugs 18a of the anchoring support 18 fit. The indicated vibration is intended for correctly seating each piece of fruit 4 on each cup 3b and also for discharging any fruit 4 that may have remained between two consecutive cups 3b.

Along the calibrator, each cup 3b is tilted to one side of the chain 1 by means of an electromagnet (not depicted in the figures) to discharge the fruit 4 from the cup 3b.

As shown more clearly in Figure 7, the transport system of the invention further comprises means for dynamically weighing the fruit 4 when it is supported on the cups 3b when the assemblies formed by the receiver modules 3 are driven by means of the chain 1, such that this function of dynamically weighing the fruit 4 is possible as a result of the floating coupling of the cup 3b on the trolley 3a through the articulated bar mechanism 15, such that in one of the phases of the transport system, each cup 3b rests during its linear mobility (driven by the chain 1 through the trolley 3a and the anchoring support 18) on parallel flats 17a that are part of a load cell 17 which is in charge of inspecting the weight of each piece of fruit 4 in a unitary manner when it is housed in the respective cup 3b and runs on the second horizontal guide 20 formed by the two branches; wherein the chain 1 runs between both branches.

In this weighing phase, the cup 3b together with the fruit 4 that it holds, are raised upwards as a result of the physical contact of the cup 3b on the two parallel guides 12; wherein the weighing of the fruit 4 occurs when the cup 3b reaches the flats 17a of the load cell 17. This occasional upward movement of the cup 3b with respect to the trolley 3a is possible as a result of its articulated connection to said trolley 3a by means of the articulated bar mechanism 15. It should be noted that the load cell 17 receives the weight of the fruit 4 continuously through an analogue signal.

Thus, the weighing of the fruit 4 occurs when the cup 3b circulates resting on the parallel flats 17a of the load cell 17; and more specifically when flaps 19 integral with the cup 3b which protrude from under said cup are supported (Figure 5).

Thus, the second horizontal guide 20 shown in Figure 7 is located in the weighing area for the fruit 4. There are two branches arranged in correspondence with the two sides of the cup 3b. The lower flaps19 of the cup 3b rest on the two branches of this second horizontal guide 20, the two branches 12 of which are interrupted to give way to the flats 17a which are integral with the load cell 17. It is at this moment when it transmits its weight to the load cell 17 which transmits an electrical signal proportional to the weight received. This signal is filtered by electronic and computer means to deduce the real weight of each piece of fruit 4. This weight is computer-linked to each cup 3b through an encoder.

As mentioned to above, the invention includes a variable speed rotation system for the biconical rollers 5 which rotate by means of external split through the belt 6 and the transmission device integrated in the cup 3b, this being a selectable rotation function or operation, such that each piece of fruit 4 may or may not be rotated at will at a required regulated speed, such that it is possible to cancel the rotation of the biconical rollers 5. This cancellation is useful for calibrating fruits 4 that cannot rotate, such as peppers.

## Claims

1. A **receiver module for receiving fruit,** comprising a lower trolley (3a) and an upper cup (3b) that is coupled with the trolley (3a) in a floating manner by means of an articulated rod mechanism (15) comprising a first fixed articulated connection (15a) located in the trolley (3a), and a second movable articulated connection (15b) located in the cup (3b) that is configured to receive the fruit (4); wherein,
- the articulated rod mechanism (15) is configured so that the cup (3b) can be raised and tilted to one side or the other in order to discharge the fruit (4) from the cup (3b);
- the cup (3b) includes at least two parallel biconical rollers (5) configured to rotate by means of a transmission device integrated in the cup (3b); such that said rotation causes the rotation of the fruit (4) resting at least on the two biconical rollers (5);
**characterised in that**:
- the biconical rollers (5) are faired into a curved-concave bottom (21) of the actual cup structure (3b); wherein the biconical rollers (5) are completely surrounded by the curved-concave bottom (21) of the cup (3b); and wherein said fairing is configured to prevent the catching of appendages, leaves and branches of the fruit (4);
- the curved-concave bottom (21) of the cup (3b) comprises a central portion (21a) located between the two biconical rollers (5) and a perimeter portion (21b) spanning an angular amplitude of 360°, wherein this perimeter portion (21b) completely surrounds the two faired-in biconical rollers (5), even covering opposing end areas which are located above the opposing ends of the biconical rollers (5); and wherein said perimeter portion (21b) provides static and dynamic stability to any position of the fruit (4) when it is inside the cup (3b).

2. **The receiver module for receiving fruit** according to claim 1, **characterised in that** the transmission device for rotating the biconical rollers (5) comprises a pulley (7) coaxially integral with a centred cogged wheel (8) which meshes with two side pinions (9) integral with ends of the biconical rollers (5).

3. **The receiver module for receiving fruit** according to any one of the preceding claims, **characterised in that** the trolley (3a) comprises at least one base (13) and two side walls (14).

4. **A transport system for inspecting fruit in a calibrator**, including a succession of receiver modules (3) such as those described in any one of the preceding claims, **characterised in that**:
- the trolleys (3a) of the receiver modules (3) are anchored to at least one transport chain (1) by means of anchoring supports (18); wherein the connection between the anchoring supports (18) and the trolleys (3a) is a loose connection; wherein the chain is coupled with two cogged wheels (2); and wherein one of these two cogged wheels (2) transmits movement to the chain (1);
- the transmission device of each receiver module (3) receives the movement through an upper branch of a motorized belt (6) which rests on a longitudinal guide (11); wherein said branch tangentially contacts the pulley (7) which is part of the transmission device; wherein the belt (6) is coupled with two end pulleys (10); and wherein the chain (1) and the belt (6) are arranged in parallel on vertical planes;
wherein during the mobility of the chain (1) which drives the receiver modules (3), the belt (6) has a linear speed selected from a linear speed greater than the chain (1), causing the rotation of the biconical rollers (5), and a linear speed equal to the speed of the chain (1) at which the biconical rollers (5) do not rotate; and wherein the area of rotation of the biconical rollers (5) can be chosen along the chain (1);
- it comprises a vibrating area, wherein the cup (3b) goes through said area to ensure that there is only one piece of fruit (4) on the cup (3b).

5. **The transport system for inspecting fruit in a calibrator** according to claim 4, **characterised in that** the trolley (3a) includes two opposing projections (16) with facing elongated holes (16a) for coupling the trolley (3a) with the chain (1) by means of an anchoring support (18); wherein the trolley (3a) is coupled in an articulated manner with the anchoring support (18) by means of lugs (18a) of the anchoring support (18) which fit with vertical clearance into the elongated holes (16a) of said trolley (3a).

6. **The transport system for inspecting fruit in a calibrator** according to any one of claims 4 or 5, **characterised in that** it comprises a first horizontal guide (12) arranged parallel to an upper branch of the chain (1) which drives the succession of receiver modules (3); wherein the trolleys (3b) of the different receiver modules (3) rest on said first horizontal guide (12) when they are driven along said upper branch of the chain (1) in an area in which the rotation of the biconical rollers (5) is carried out.

7. **The transport system for inspecting fruit in a calibrator** according to any one of preceding claims 4 to 6, **characterised in that** it includes dynamic weighing means comprising a load cell (17) including a pair of parallel flats (17a) which are configured so that the cups (3b) rest thereon in a unitary manner during the advancement of the receiver modules (3) driven by the chain (1) which run supported on a second guide (20) formed by two parallel branches between which the chain (1) is located in parallel; wherein when the cups (3b) are supported on the parallel flats (17a), said cups (3b) are raised upwards being articulated with the trolleys (3a) by means of the articulated rod mechanisms (15) with a floating effect of the cups (3b) with respect to the trolley (3a).
